# FASCICULE DE BREVET EUROPEEN

(11) **EP 1 397 403 B1**
(45) Date de publication et mention de la délivrance du brevet: **12.03.2008**
(21) Numéro de dépôt: 02727681.5
(22) Date de dépôt: 19.04.2002
(51) Int. Cl.: C08F 293/00, C11D 3/37, C09D 153/00

(54) **COPOLYMERES A BLOCS TENSIOACTIFS PREPARES PAR POLYMERISATION RADICALAIRE CONTROLEE**
BLOCKCOPOLYMER-TENSIDE DURCH EINE KONTROLLIERTE RADIKALPOLYMERISATION HERGESTELLT
COPOLYMER WITH SURFACTANT BLOCKS PREPARED BY CONTROLLED FREE RADICAL POLYMERISATION

(30) Priorité: 04.05.2001 US 288844 P
(43) Date de publication de la demande: 17.03.2004
(73) Titulaire: RHODIA CHIMIE, 92512 Boulogne Billancourt Cedex (FR)
(72) Inventeur: ADAM, Hervé, PRINCETON, NJ 8540 (US); HERVE, Pascal, WEST WINDSOR, NJ 08550 (US); JOANICOT, Mathieu, LAWRENCEVILLE, NJ 08648 (US); LIU, Wan-Li, Belle Mead, NJ 08502 (US); TALINGTING, Maria, Ruela, Burlington, NJ 08016 (US)
(74) Mandataire: Delenne, Marc
(86) Numéro de dépôt international: PCT/FR2002/001349
(87) Numéro de publication internationale: WO 2002/090409

(56) Documents cités:
- EP-A- 0 887 362
- WO-A-96/15157
- DE-A- 19 704 714
- FR-A- 2 794 463
- FR-A- 2 794 464

## Description

La présente invention a pour objet un copolymère a blocs tensioactifs préparés par polymérisation radicalaire contrôlée, ainsi qu'un procédé de préparation desdits copolymères.

La présente invention a donc pour objet un copolymère tensioactif à blocs comportant au moins un bloc hydrophile et au moins un bloc hydrophobe et préparé par un procédé de préparation dite vivante à l'aide d'un agent de transfert, le bloc hydrophile étant obtenu en mettant en oeuvre au moins un monomère choisi parmi l'acide acrylique et l'acrylamide, et ledit copolymère présentant :
- une masse moléculaire en nombre comprise entre 1 000 et 50 000, de préférence entre 2 000 et 20 000, de façon encore plus préférée entre 4 000 et 16 000
- une température de transition vitreuse du bloc hydrophobe inférieure à 30°C, de préférence inférieure à 25°C et supérieure à -100°C, et
- une tension superficielle inférieure à 60 millinewton par mètre (mN/m), de préférence inférieure à 50 mN/m, mesurée à une concentration dans l'eau déminéralisée inférieure ou égale à 10⁻⁴ mole/l, à 20°C et sous une atmosphère.

De façon optionnelle, pour certaines applications des copolymères, il est préférable de rendre l'agent de transfert localisé à une des extrémités de la molécule, chimiquement inerte ou bien de détruire ledit agent.

D'autres avantages et caractéristiques de la présente invention apparaîtront plus clairement à la lecture de la description et des exemples qui vont suivre.

Selon l'invention, les copolymères tensioactifs à blocs comportant au moins un bloc hydrophile et au moins un bloc hydrophobe, sont préparés par un procédé de polymérisation radicalaire dite vivante ou contrôlée impliquant l'utilisation d'un agent de transfert précisément en vue du contrôle de ladite polymérisation radicalaire.

D'une manière générale, les copolymères à blocs précédents peuvent être obtenus par tout procédé de polymérisation dite vivante ou contrôlée tel que, par exemple:
- la polymérisation radicalaire contrôlée par les xanthates selon l'enseignement de la demande WO 98/58974,
- la polymérisation radicalaire contrôlée par les dithioesters selon l'enseignement de la demande WO 98/01478
- la polymérisation à l'aide de précurseurs nitroxydes selon l'enseignement de la demande WO 99/03894,
- la polymérisation radicalaire contrôlée par les dithiocarbamates selon l'enseignement de la demande WO 99/31144,
- la polymérisation radicalaire par transfert d'atome (ATRP) selon l'enseignement de la demande WO 96/30421,
- la polymérisation radicalaire contrôlée par les iniferters selon l'enseignement de Otu et al., Makromol. Chem. Rapid. Commun., 3, 127 (1982),
- la polymérisation radicalaire contrôlée par transfert dégénératif d'iode selon l'enseignement de Tatemoto et al., Jap. 50, 127, 991 (1975), Daikin Kogyo Co Itd Japan et Matyjaszewski et al., Macromolecules, 28, 2093 (1995),
- la polymérisation par transfert de groupe selon l'enseignement de Webster O.W. "Group Transfer Polymerization", p. 580-588 de l"'Encyclopedia of Polymer Science and Engineering", vol.7 et H.F. Mark, N.M. Bikales, C.G. Overberger and G. Menges, Eds., Wiley Interscience, New York, 1987,
- la polymérisation radicalaire contrôlée par les dérivés du tetraphényléthane (D. Braun et al. Macromol.Symp. 111,63 (1996)),
- la polymérisation radicalaire contrôlée par les complexes organocobalt (Wayland et al. J.Am.Chem.Soc. 116,7973 (1994)).

Les agents de transfert préférés pour mettre en oeuvre le procédé de polymérisation contrôlés sont choisis parmi les dithioesters, thioethers-thiones, dithiocarbamates, et les xanthates.

La polymérisation préférée est la polymérisation radicalaire vivante à l'aide de xanthates.

L'invention concerne en outre un procédé de préparation de ces polymères à blocs. Ce procédé consiste à:
1- mettre en contact:
   - au moins un monomère éthyléniquement insaturé,
   - au moins une source de radicaux libres, et
   - au moins un agent de transfert de formule (I): 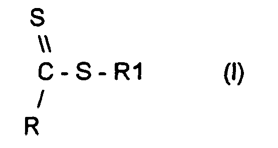
   dans laquelle:
   - R représente un groupe R2O-, R2R'2N- ou R3- avec :
      R2 et R'2, identiques ou différents, représentant un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
      R3 représentant H, CI, un groupe alkyle, aryle, alcène ou alcyne, un (hétéro)cycle saturé ou non, éventuellement substitués, un groupe alkylthio, alkoxycarbonyle, aryloxycarbonyle, carboxy, acyloxy, carbamoyles, cyano, dialkyl- ou diaryl-phosphonato, dialkyl- ou diaryl-phosphinato, une chaîne polymère,
   - R1 représente un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, ou une chaîne polymère, et

   Les groupes R1, R2, R'2 et R3 peuvent être substitués par des groupes alkyles, phényles substitués, des groupes aromatiques substitués ou des groupes: oxo, alkoxycarbonyle ou aryloxycarbonyle (-COOR), carboxy (-COOH), acyloxy (-O2CR), carbamoyle (-CONR2), cyano (-CN), alkylcarbonyle, alkylarylcarbonyle, arylcarbonyle, arylalkylcarbonyle, isocyanato, phtalimido, maleïmido, succinimido, amidino, guanidino, hydroxy (-OH), amino (-NR2), halogène, allyle, époxy, alkoxy (-OR), S-alkyle, S-aryle, silyle, des groupes présentant un caractère hydrophile ou ionique tels que les sels alcalins d'acides carboxyliques, les sels alcalins d'acide sulfonique, les chaînes polyoxyde d'alkylène (POE, POP), les substituants cationiques (sels d'ammonium quaternaires), R représentant un groupe alkyle ou aryle, et
2- répéter au moins une fois la mise en contact précédente en utilisant
   - des monomères différents de la mise en oeuvre précédente, et
   - à la place du composé précurseur de formule (I), le polymère issu de la mise en oeuvre précédente,
3- rendre inerte l'agent de transfert à la fin de la polymérisation.

De préférence, l'agent de transfert de formule (I) est un dithiocarbonate choisi parmi les composés de formules (IA), (IB) et (IC) suivantes: 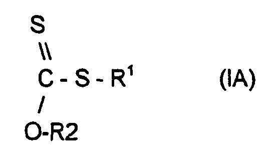 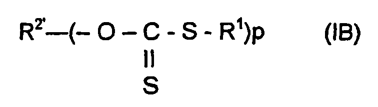 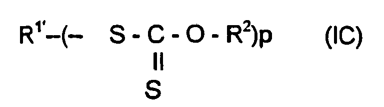 dans lesquelles:
- R2 et R2' représentent un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
- R1 et R1' représentent un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, une chaîne polymère,
- p est compris entre 2 et 10.

Au cours de l'étape 1, un premier bloc du polymère est synthétisé de nature hydrophile ou hydrophobe selon la nature et la quantité des monomères utilisés. Au cours de l'étape 2, l'autre bloc du polymère est synthétisé.

Les monomères éthyléniquement insaturés sont choisis parmi les monomères hydrophiles et hydrophobes dans les proportions adaptées pour obtenir un copolymère à blocs tensioactif dont les blocs présentent les caractéristiques de l'invention. Selon ce procédé, si toutes les polymérisations successives sont réalisées dans le même réacteur, il est généralement préférable que tous les monomères utilisés lors d'une étape aient été consommés avant que la polymérisation de l'étape suivante ne commence, donc avant que les nouveaux monomères ne soient introduits. Toutefois, il peut arriver que les monomères hydrophobes ou hydrophiles de l'étape précédente soient encore présents dans le réacteur lors de la polymérisation du bloc suivant. Dans ce cas, ces monomères ne représentent généralement pas plus de 5 % en mole de tous les monomères et ils participent à la polymérisation suivante en contribuant à introduire des motifs hydrophobes ou hydrophiles dans le bloc suivant

Les copolymères tensioactifs à blocs préparés selon ce procédé de polymérisation peuvent être simplement di-blocs avec un bloc hydrophobe et un bloc hydrophile ou bien également tri-blocs avec soit un bloc hydrophile entouré de deux blocs hydrophobes ou bien un bloc hydrophobe entouré de deux blocs hydrophiles.

A titre d'illustration de monomères hydrophobes utilisables pour préparer le bloc hydrophobe, on peut citer notamment les esters (méth)acryliques, les esters vinyliques et les nitriles vinyliques.

Par esters (méth)acryliques, on désigne les esters de l'acide acrylique et de l'acide méthacrylique avec les alcools en C₁-C₁₂ hydrogénés ou fluorés, de préférence C₁-C₈. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle. Les monomères préférés sont les esters de l'acide acryliques avec les alcohols linéaires ou ramifiés en C₁-C₄ tels que l'acrylate de méthyle, d'éthyle, de propyle et de butyle.

Les nitriles vinyliques incluent plus particulièrement ceux ayant de 3 à 12 atomes de carbone, comme en particulier l'acrylonitrile et le méthacrylonitrile. Les autres monomères éthyléniquement insaturés, utilisables seuls ou en mélanges, ou copolymérisables avec les monomères ci-dessus sont notamment :
- les esters vinyliques d'acide carboxylique comme l'acétate de vinyle, le versatate de vinyle, le propionate de vinyle,
- les halogénures de vinyle,
- les amides de la vinylamine, notamment le vinylformamide ou le vinylacétamide,
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou
- méthacrylate, le ditertiobutylaminoéthyl-acrylate ou -méthacrylate, le diméthylamino méthyl-acrylamide ou -méthacrylamide.

Il est bien évidemment possible de faire entrer dans la composition des copolymères à blocs une certaine proportion de monomères hydrophobes dans le bloc hydrophile et une certaine proportion de monomères hydrophiles dans le bloc hydrophobe, dès l'instant que les propriétés tensioactives et les limites de la masse moléculaire en nombre, de la température de transition vitreuse du groupe hydrophobe et de tension superficielle, restent vérifiées.

La polymérisation du copolymère peut être mise en oeuvre dans un milieu aqueux et/ou solvant organique tel que le tétrahydrofurane ou un alcool aliphatique en C₁-C₈linéaire cyclique ou ramifié tel que le méthanol, l'éthanol, ou le cyclohexanol, ou un diol tel que l'ethylèneglycol. Un solvant alcoolique est plus particulièrement recommandé dans le cas ou les monomères hydrophiles sont l'acide acrylique (AA), l'acrylamide (AM), l'acide 2-acrylamido-2-méthyl-propanesulfonique (AMPS), et le sulfonate de styrène (SS)et les monomères hydrophobes sont l'acrylate de n-butyle, l'acrylate d'isobutyle, l'acrylate de 2-éthylhexyle, l'acrylate de t-butyle.

A la fin de l'étape de polymérisation contrôlée, l'agent de transfert localisé à une des extrémités de chaîne du polymère tensioactif à blocs, peut être rendu inerte si souhaité pour l'utilisation finale du copolymère. Il est possible que la nature du milieu réactionnel de polymérisation (par exemple conditions de pH, nature des constituants du milieu réactionnel (monomères à polymériser), soit suffisant en soi pour inactiver l'agent de transfert en fin de polymérisation. Il est également possible que le milieu à traiter lors de l'utilisation finale du copolymère, inactive ou neutralise de façon inhérente l'agent de transfert. On recommande, si cela est nécessaire pour certaines applications, de masquer les fonctions chimiques actives dudit agent au moyen d'un agent masquant chimique approprié, ou de détruire l'agent de transfert par une réaction d'hydrolyse, d'oxydation par catalyse métallique ou par l'utilisation de radicaux primaires. Dans le cas du xanthate comme agent de transfert, on recommande de le rendre inerte, si nécessaire, par un traitement du copolymère formé au moyen d'un traitement thermique par exemple dans l'intervalle de température 80 à 180°C en présence d'un alcanolamine tel que la triéthanolamine.

La présente invention concerne également l'obtention de copolymères à blocs qui, en plus de leurs propriétés tensioactives et de stabilisateurs d'émulsion aqueuse, abaissent la tension de surface de l'eau, entraînent la formation de micelles et/ou de petites vésicules en suspension dans l'eau à l'intérieur desquelles peut être mise en oeuvre une réaction chimique ou bien peut être encapsulé un principe actif.

L'invention concerne aussi l'utilisation des copolymères à blocs précédents en tant que promoteurs d'adhérence. Ils sont également utilisables comme agents mouillants ou agents d'hydrophylisation pour l'enduction de surfaces plus ou moins hydrophobes avec effet rémanent après rinçage. De préférence, les polymères peuvent être utilisés dans une quantité généralement comprise entre 0,1 % et 10% en poids par rapport au milieu aqueux. Les copolymères à blocs selon l'invention présentent notamment l'avantage d'améliorer l'adhésion des peintures sur des substrats hydrophobes tels que des substrats en matière plastiques et d'augmenter l'adhérence de fibres et de supports plastiques avec des composés issus de dispersions aqueuses (ciment, mastics). Dans cette application particulière comme agent d'adhérence, il est recommandé d'utiliser de 0,1 à 10%, de préférence de 0,5 à 5% en poids de copolymère par rapport au poids total de la peinture. Dans l'application en tant qu'agent mouillant en solution aqueuse, il est recommandé d'utiliser une quantité de 0,01 à 3 %, de préférence de 0.1 à 1% en poids de copolymère par rapport au poids total de ladite solution.

Les copolymères à blocs selon l'invention sont également des promoteurs des agents détergents classiques tels que les benzènes alkylsulfonates quand ils sont utilisés en association avec ces derniers à une dose de préférence comprise entre 0,5 et 5% en poids par rapport au poids du détergent.

Dans le cas particulier d'un copolymère à blocs polyacrylate de butyle/polyacide acrylique noté p(BA)-b-p(AA) selon l'invention, on a l'éventail de propriétés suivantes en faisant varier les rapports massiques p(BA)/p(AA) de la façon suivante :
propriétés tensioactives et de stabilisateur d'émulsion aqueuse :
   p(BA)/p(AA) compris entre 10/90 et 40/60 ;
      formation de vésicules :
   p(BA)/p(AA) compris entre 70/30 et 80/20 ; et
      promoteurs d'adhérence et agents mouillants :
   p(BA)/p(AA) compris entre 70/30 et 40/60 ;

A la fin de l'étape de polymérisation contrôlée, l'agent de transfert localisé à une des extrémités de chaîne du polymère tensioactif à blocs, peut être rendu chimiquement inerte par tout moyen convenable. Le fait de rendre inerte l'agent de transfert peut être avantageux pour certaines applications. On recommande alors de masquer les fonctions chimiques actives dudit agent au moyen d'un agent masquant chimique approprié, ou de détruire l'agent de transfert par une réaction d'hydrolyse, d'oxydation par catalyse métallique ou par l'utilisation de radicaux primaires.

Des exemples concrets de l'invention vont maintenant être présentés.

Dans les exemples qui suivent:
- Mn représente la masse moléculaire moyenne en nombre Mn des polymères, Mn est exprimée en équivalents polystyrène (g/mol),
- Mw représente la masse moléculaire moyenne en poids (g/mol),
- Mw/Mn représente l'indice de polydispersité,
- les polymères, avant hydrolyse, sont analysés par chromatographie (GPC) avec le THF comme solvant d'élution.

Les exemples suivants illustrent la préparation de copolymères tensioactifs diblocs selon l'invention :

### Exemple 1 : Préparation d'un polymère dibloc 50/50 en poids p{BA)-b-p(AA) (polyacrylate de butyle-polyacide acrylique) comprenant une extrémité réactive du type xanthate

On introduit dans un réacteur muni d'un agitateur magnétique et d'une colonne à reflux, et comprenant 160 g d'acétone, le mélange suivant :
- 3,04 g de S-éthylpropionyl O-éthyl dithiocarbonate (xanthate)
- 21,24 g d'isopropanol, et
- 0,82 g d'azo bis-isobutyronitrile (AIBN).

Le mélange est ensuite agité et maintenu à reflux à 70°C. On ajoute 66g d'acide acrylique (AA) et 15g d'eau graduellement pendant 3 heures. Puis 0,41 g d'azo bis-isobutyronitrile sont ajoutés après une heure d'addition puis encore 0,41 g d'azo bis-isobutyronitrile sont ajoutés après une seconde heure d'addition. Une fois l'addition d'acide acrylique terminée, on laisse la polymérisation se poursuivre pendant une autre heure. Un quantité de 0,20g de mélange réactionnel est prélevée comme échantillon de PAA homopolymère.

La température est ensuite abaissée à 65°C par addition de 560g d'acétone. Tout en maintenant la température à 65°C, on ajoute graduellement 140g d'acrylate de butyle (BA) pendant 3 heures. On ajoute 0,40g d'AlBN au commencement de l'addition de BA. On laisse la réaction se poursuivre pendant encore 3 heures. Le mélange réactionnel est laissé refroidir et les solvants sont pratiquement complètement éliminés à l'aide d'un rotavapeur (évaporateur tournant). Le résidu obtenu est dispersé dans l'eau et lyophilisé. Les polymères sont analysés par résonance magnétique nucléaire du carbone 13 et par la mesure de leur teneur en acide.

La masse moléculaire en nombre du copolymère est de 15 000.

La température de transition vitreuse du bloc hydrophobe est de -54°C.

La tension de surface est de 55 mN/m à 10⁻⁴ mole/l.

### Exemple 2 : Préparation d'un polymère dibloc 70/30 en poids p(8A)-b-p(AA) (polyacrylate de bulyle-polyacide acrylique) comprenant une extrémité réactive du type xanthate :

On introduit sous atmosphère d'azote dans un réacteur muni d'un agitateur magnétique et d'une colonne à reflux, et comprenant 160 g d'acétone, le mélange suivant :
- 0,61 g de S-éthylpropionyl O-éthyl dithiocarbonate (xanthate)
- 4,25 g d'isopropanol,
- 0,16 g d'azo bis-isobutyronitrile

Le mélange est ensuite agité et maintenu à reflux à 70°C. On ajoute 13,2g d'acide acrylique (AA) et 30,3g d'eau graduellement pendant 3 heures. Puis 0,08 g d'azo bis-isobutyronitrile sont ajoutés après une heure d'addition puis encore 0,08 g d'azo bis-isobutyronitrile sont ajoutés après une seconde heure d'addition. Une fois l'addition d'acide acrylique terminée, on laisse la polymérisation se poursuivre pendant une autre heure. Une quantité de 4,1g de mélange réactionnel est prélevée comme échantillon de PAA homopolymère.

La température est ensuite abaissée à 65°C par addition de 112g d'acétone. Tout en maintenant la température à 65°C, on ajoute graduellement 28g d'acrylate de butyle (BA) pendant 3 heures. On ajoute 0,08g d'AIBN au commencement de l'addition de BA. On arrête la purge d'azote et on laisse la réaction se poursuivre pendant encore 12 heures. Le mélange réactionnel est laissé refroidir et les solvants sont pratiquement complètement éliminés à l'aide d'un rotavapeur (évaporateur tournant). Le résidu obtenu est dispersé dans l'eau et lyophilisé. Les polymères sont analysés par résonance magnétique nucléaire du carbone 13 et par la mesure de leur teneur en acide.

La masse moléculaire en nombre est de 15 000.

La température de transition vitreuse du bloc hydrophobe est de :-54°C.

La tension de surface est de 52 mN/m à 10⁻⁴ mole/l.

### Exemple 3 : Préparation d'un polymère dibloc 60/40 en poids p(BA)-b-p(AA) comprenant une extrémité réactive du type xanthate:

On introduit dans un réacteur muni d'un agitateur magnétique et d'une colonne à reflux, et comprenant 160 g d'acétone, le mélange suivant :
- 1,53 g de S-éthylpropionyl O-éthyl dithiocarbonate (xanthate)
- 10,72 g d'isopropanol, et
- 0,42 g d'azo bis-isobutyronitrile (AIBN).

Le mélange est ensuite agité et maintenu à reflux à 70°C. On ajoute 44,0 g d'acide acrylique (AA) et 75,4g d'eau graduellement pendant 3 heures. Puis 0,21 g d'azo bis-isobutyronitrile sont ajoutés après une heure d'addition puis encore 0,21 g d'azo bis-isobutyronitrile sont ajoutés après une seconde heure d'addition. Une fois l'addition d'acide acrylique terminée, on laisse la polymérisation se poursuivre pendant une autre heure. Une quantité de 10,98 g de mélange réactionnel est prélevée comme échantillon de PAA homopolymère.

La température est ensuite abaissée à 65°C par addition de 280 g d'acétone. Tout en maintenant la température à 65°C, on ajoute graduellement 60 g d'acrylate de butyle (BA) pendant 3 heures. On ajoute 0,20 g d'AIBN au commencement de l'addition de BA. On arrête la purge d'azote et on laisse la réaction se poursuivre pendant encore 12 heures. Le mélange réactionnel est laissé refroidir et les solvants sont pratiquement complètement éliminés à l'aide d'un rotavapeur (évaporateur tournant). Le résidu obtenu est dispersé dans l'eau et lyophilisé. Les polymères sont analysés par résonance magnétique nucléaire du carbone 13 et par la mesure de leur teneur en acide.

La masse moléculaire du copolymère en nombre est de 15 000.

La température de transition vitreuse du bloc hydrophobe PBA est de -54°C et de 105°C pour le bloc PAA.

La tension de surface est de 58,8 mN/m à 10⁻⁴ mole/l.

### Exemple 4 : Préparation d'un polymère dibloc 80/20 en poids p(BA)-b-p(AA) (polyacrylate de butyle-polyacide acrylique) comprenant une extrémité réactive du type xanthate :

On introduit dans un réacteur muni d'un agitateur magnétique et d'une colonne à reflux, et comprenant 160 g d'acétone, le mélange suivant :
- 0,61 g de S-éthylpropionyl O-éthyl dithiocarbonate (xanthate)
- 4,21 g d'isopropanol, et
- 0,16 g d'azo bis-isobutyronitrile (AIBN).

Le mélange est ensuite agité et maintenu à reflux à 70°C. On ajoute 8,80 g d'acide acrylique (AA) et 30,35 g d'eau graduellement pendant 3 heures. Puis 0,08 g d'azo bis-isobutyronitrile sont ajoutés après une heure d'addition puis encore 0,08 g d'azo bis-isobutyronitrile sont ajoutés après une seconde heure d'addition. Une fois l'addition d'acide acrylique terminée, on laisse la polymérisation se poursuivre pendant une autre heure. Un quantité de 3,7 g de mélange réactionnel est prélevée comme échantillon de PAA homopolymère.

La température est ensuite abaissée à 65°C par addition de 112 g d'acétone. Tout en maintenant la température à 65°C, on ajoute graduellement 32 g d'acrylate de butyle (BA) pendant 3 heures. On ajoute 0,08 g d'AIBN au commencement de l'addition de BA. On arrête la purge d'azote et on laisse la réaction se poursuivre pendant encore 12 heures. Le mélange réactionnel est laissé refroidir et les solvants sont pratiquement complètement éliminés à l'aide d'un rotavapeur (évaporateur tournant). Le résidu obtenu est dispersé dans l'eau et lyophilisé. Les polymères sont analysés par résonance magnétique nucléaire du carbone 13 et par la mesure de leur teneur en acide.

La masse moléculaire du copolymère en nombre est de 15 000.

La température de transition vitreuse du bloc hydrophobe PBA est de -54°C et de 105°C pour le bloc PAA.

### Exemple 5 : Préparation d'un polymère dibloc 55/45 en poids p(BA)-b-p(AA) (polyacrylate de butyle-polyacide acrylique) comprenant une extrémité réactive du type xanthate :

On introduit dans un réacteur muni d'un agitateur magnétique et d'une colonne à reflux, et comprenant 160 g d'acétone, le mélange suivant :
- 0,61 g de S-éthylpropionyl O-éthyl dithiocarbonate (xanthate)
- 4,31 g d'isopropanol, et
- 0,17 g d'azo bis-isobutyronitrile (AlBN).

Le mélange est ensuite agité et maintenu à reflux à 70°C. On ajoute 19,80 g d'acide acrylique (AA) et 30,31 g d'eau graduellement pendant 3 heures. Puis 0,08 g d'azo bis-isobutyronitrile sont ajoutés après une heure d'addition puis encore 0,08 g d'azo bis-isobutyronitrile sont ajoutés après une seconde heure d'addition. Une fois l'addition d'acide acrylique terminée, on laisse la polymérisation se poursuivre pendant une autre heure. Un quantité de 4,76 g de mélange réactionnel est prélevée comme échantillon de PAA homopolymère.

La température est ensuite abaissée à 65°C par addition de 112 g d'acétone. Tout en maintenant la température à 65°C, on ajoute graduellement 22 g d'acrylate de butyle (BA) pendant 3 heures. On ajoute 0,08 g d'AlBN au commencement de l'addition de BA. On arrête la purge d'azote et on laisse la réaction se poursuivre pendant encore 12 heures. Le mélange réactionnel est laissé refroidir et les solvants sont pratiquement complètement éliminés à l'aide d'un rotavapeur (évaporateur tournant). Le résidu obtenu est dispersé dans l'eau et lyophilisé. Les polymères sont analysés par résonance magnétique nucléaire du carbone 13 et par la mesure de leur teneur en acide.

La masse moléculaire du copolymère en nombre est de 15 000.

La température de transition vitreuse du bloc hydrophobe PBA est de -54°C et de 105°C pour le bloc PAA.

La tension de surface est de 58,0 mN/m à 10⁻⁴mole/l.

### Exemple 6 : Préparation d'un polymère dibloc avec rapport en poids p(BA)/p(AM) : 60/40 p(BA)₃₀₀₀-b-p(AM)₂₀₀₀ (polyacrylate de butyle-polyacrylamide) comprenant une extrémité réactive du type xanthate:

### 1) Etape 1: Synthèse du monobloc p(BA)₃₀₀₀-X (X=xanthate)

| Composition du mélange réactionnel: | |
|---|---|
| Tétrahydrofurane | 66,38 g. |
| Butyl Acrylate | 24,00 g. |
| S-éthylpropionyl (O-ethyldithiocarbonate) | 1,664 g. |
| AIBN (Azo-bis-isobutyronitrile) | 0,263 g. |

Les ingrédients ci-dessus sont chargés dans un réacteur de polymérisation de 250 ml muni d'un agitateur magnétique. La réaction est effectuée sous atmosphère d'azote sec pendant 20 minutes, le mélange réactionnel est ensuite chauffé à 60°C et maintenu à cette température pendant 20 heures. De petites quantités d'échantillons de polymères sont prélevés de temps en temps pour contrôler la conversion. La teneur en matière solide est de 28,09%.

### 2) Etape 2: Synthèse du dibloc p(BA)₃₀₀₀-b-p(AM)₂₀₀₀-X

| Composition du mélange réactionnel: | |
|---|---|
| Tétrahydrofurane | 63,00 g. |
| Acrylamide | 16,00 g. |
| AlBN (Azo-bis-isobutyronitrile) | 0,263 g. |

Les ingrédients ci-dessus sont chargés dans un récipient sec sous atmosphère d'azote sec pendant 20 minutes, puis transférés dans le réacteur de polymérisation à l'aide d'une seringue à 2 embouts. A la fin du transfert, le mélange réactionnel est ensuite chauffé à 60°C et maintenu à cette température pendant 20 heures. De petites quantités d'échantillons de polymères sont prélevés de temps en temps pour contrôler la conversion. La teneur en matière solide est de24,59%.

Le mélange réactionnel est laissé refroidir et les solvants sont pratiquement complètement éliminés à l'aide d'un rotavapeur (évaporateur tournant).

La masse moléculaire en nombre du copolymère est de 5 000.

La température de transition vitreuse du bloc hydrophobe PBA est de :-54 °C et de 165°C pour le bloc PAM.

La tension de surface est de 58 mN/m.

### Exemple 7: Préparation d'un polymère dibloc avec rapport en poids p(BA)/p(AA) : 80/20 p(BA)₄₀₀₀-b-p(AA)₁₀₀₀ (polyacrylate de butyle-polyacide acrylique) comprenant une extrémité réactive du type xanthate dans l'éthanol :

### 1) Etape 1: Synthèse du monobloc p(BA)₄₀₀₀-X

| Composition du mélange réactionnel: | |
|---|---|
| Ethanol | 79,00 g. |
| Acrylate de butyle | 32,00 g. |
| S-éthylpropionyl (O-ethyldithiocarbonate) | 1,664 g. |
| AlBN (Azo-bis-isobutyronitrile) | 0,263 g. |

Les ingrédients ci-dessus sont chargés dans un réacteur de polymérisation de 250 ml muni d'un agitateur magnétique. La réaction est effectuée sous atmosphère d'azote sec pendant 20 minutes, le mélange réactionnel est ensuite chauffé à 60°C et maintenu à cette température pendant 20 heures. De petites quantités d'échantillons de polymères sont prélevés de temps en temps pour contrôler la conversion. La teneur en matière solide est de 30,04%.

### 2) Etape 2: Synthèse du dibloc p(BA)₄₀₀₀-b-p(AA)₁₀₀₀-X

| Composition du mélange réactionnel: | |
|---|---|
| Ethanol | 19,00 g. |
| Acide acrylique | 8,00 g. |
| AIBN (Azo-bis-isobutyronitrile) | 0,066 g. |

Les ingrédients ci-dessus sont chargés dans un récipient sec sous atmosphère d'azote sec pendant 20 minutes, puis transférés dans le réacteur de polymérisation à l'aide d'une seringue à 2 embouts. A la fin du transfert, le mélange réactionnel est ensuite chauffé à 60°C et maintenu à cette température pendant 20 heures. De petites quantités d'échantillons de polymères sont prélevés de temps en temps pour contrôler la conversion. La teneur en matière solide est de 30%.

Le mélange réactionnel est laissé refroidir et les solvants sont pratiquement complètement éliminés à l'aide d'un rotavapeur (évaporateur tournant).

La masse moléculaire en nombre du copolymère est de 5 000.

La température de transition vitreuse du bloc hydrophobe pBA est de -54°C et de 105°C pour le bloc pAA.

### Exemple 8: Synthèse du dibloc p(BA)₇₅₀₀-b-p(AA)₇₅₀₀ - X avec rapport en poids p(BA)/p(AA) : (50/50)

### A) Etape 1: Synthèse du monobloc p(BA)₇₅₀₀-X

| Composition du mélange réactionnel: | |
|---|---|
| Tétrahydrofurane | 48,00 g. |
| Acrylate de butyle | 20,00 g. |
| S-éthylpropionyl O-éthyldithiocarbonate | 0,555 g. |
| AlBN (Azo-bis- isobutyronitrile) | 0,088 g. |

Les ingrédients ci-dessus sont chargés dans un réacteur de polymérisation de 250 ml muni d'un agitateur magnétique. La réaction est effectuée sous atmosphère d'azote sec pendant 20 minutes, le mélange réactionnel est ensuite chauffé à 60°C et maintenu à cette température pendant 20 heures. De petites quantités d'échantillons de polymères sont prélevés de temps en temps pour contrôler la conversion. La teneur en matière solide est de 30.2%.

### B)) Etape 2: Synthèse du dibloc p(BA)₇₅₀₀-b-p(AA)₇₅₀₀ - X

| | |
|---|---|
| Composition du mélange réactionnel: | |
| Tétrahydrofurane | 47,00 g. |
| Acid acrylique | 20,00 g. |
| AIBN (Azo-bis-isobutyronitrile) | 0,088 g. |

Les ingrédients ci-dessus sont chargés dans un récipient sec sous atmosphère d'azote sec pendant 20 minutes, puis transférés dans le réacteur de polymérisation à l'aide d'une seringue à 2 embouts. A la fin du transfert, le mélange réactionnel est ensuite chauffé à 60°C et maintenu à cette température pendant 20 heures. De petites quantités d'échantillons de polymères sont prélevés de temps en temps pour contrôler la conversion. La teneur en matière solide est de 30%.

Le mélange réactionnel est laissé refroidir et les solvants sont pratiquement complètement éliminés à l'aide d'un rotavapeur (évaporateur tournant).

La masse moléculaire en nombre du copolymère est de 15 000.

La température de transition vitreuse du bloc hydrophobe p(BA) est de -54°C et de 105°C pour le bloc p(AA).

La tension de surface est de 55 mN/m.

### Exemple 9: Synthèse du dibloc p(BA)₁₀₀₀-b-p(AA)₄₀₀₀ - X avec rapport en poids p(BA)/p(AA) : (20/80)

### A) Etape 1: Synthèse du monobloc p(BA)₁₀₀₀-X

On reproduit exactement le mode opératoire de l'étape A) de l'exemple 8 sauf que l'on utilise le mélange réactionnel:

| | |
|---|---|
| Tétrahydrofurane | 23,00 g. |
| Acrylate de butyle | 8,00 g. |
| S-éthylpropionyl O-ethyldithiocarbonate | 1,664 g. |
| AIBN (Azo-bis-isobutyronitrile) | 0,263 g. |

La teneur en solides est de 30,2%.

### B) Etape 2: Synthèse du dibloc p(BA)₁₀₀₀-b-p(AA)₄₀₀₀-X

On reproduit exactement le mode opératoire de l'étape B) de l'exemple 8 sauf que l'on utilise le mélange réactionnel:

| | |
|---|---|
| Tétrahydrofurane | 75,00 g. |
| Acide acrylique | 32,00 g. |
| AIBN (Azo-bis-isobutyronitrile) | 0,263 g. |

Le mélange réactionnel est laissé refroidir et les solvants sont pratiquement complètement éliminés à l'aide d'un rotavapeur (évaporateur tournant).

La masse moléculaire en nombre du copolymère est de 5 000.

La température de transition vitreuse du bloc hydrophobe pBA est de -54°C et de 105°C pour le bloc pAA.

La tension de surface est de 45,11 mN/m.

### Exemple 10: Synthèse du dibloc p(BA)₂₀₀₀-b-p(AM)₃₀₀₀- X avec rapport en poids p(BA)/p(AM) : (40/60)

### A) Etape 1: Synthèse du monobloc p(BA)₁₀₀₀-X

On reproduit exactement le mode opératoire de l'étape A) de l'exemple 8 sauf que l'on utilise le mélange réactionnel:

| | |
|---|---|
| Tétrahydrofurane | 30,00 g. |
| Acrylate de butyle | 16,00 g. |
| S-éthylpropionyl O-éthyldithiocarbonate | 1,664 g. |
| AIBN (Azo-bis-isobutyronitrile) | 0,263 g. |

La teneur en matière solide est de 37,4%.

### B) Etape 2: Synthèse du dibloc p(BA)₂₀₀₀-b-p(AM)₃₀₀₀ - X

On reproduit exactement le mode opératoire de l'étape B) de l'exemple 8 sauf que l'on utilise le mélange réactionnel:

| | |
|---|---|
| Tétrahydrofurane | 100,00 g. |
| Acrylamide | 24,00 g. |
| AIBN (Azo-bis-isobutyronitrile) | 0,263 g. |

Le mélange réactionnel est laissé refroidir et les solvants sont pratiquement complètement éliminés à l'aide d'un rotavapeur (évaporateur tournant).

La masse moléculaire en nombre du copolymère est de 5 000.

La température de transition vitreuse du bloc hydrophobe p(BA) est de -54°C et de 165°C pour le bloc p(AM).

La tension de surface est de 52 mN/m.

### Exemple 11: Etape de décomposition du thiocarbonylthio (Di-thiocarbonate, ou Xanthate) en bout de chaîne des copolymères

Cette étape de décomposition est générale et s'applique à tous les copolymères des exemples 1 à 10 :
A une solution de 6 g d'un copolymère tel qu'obtenu à l'un quelconque des exemples 1 à 10, à 30% en poids dans le tetrahydrofurane, on ajoute 0,09 g de triéthanolamine dans un récipient scellé muni d'un agitateur magnétique. Le récipient est agité et chauffé à 160°C dans un bain d'huile pendant 16 heures. Le polymère rendu inerte est caractérisé par ¹³C-RMN. Le rapport des groupes C=S à 216 ppm aux groupes C=O dans le polymère à 176 ppm diminue en fonction du temps de réaction. Les groupes C=S disparaissent à la fin de la réaction.

## Revendications

1. Copolymère tensioactif à blocs comportant au moins un bloc hydrophile et au moins un bloc hydrophobe et préparé par un procédé de préparation dite vivante à l'aide d'un agent de transfert,
- le bloc hydrophile étant obtenu en mettant en oeuvre au moins un monomère choisi parmi l'acide acrylique et l'acrylamide, et
- ledit copolymère présentant :
- une masse moléculaire en nombre comprise entre 1 000 et 50 000, de préférence entre 2 000 et 20 000, de façon encore plus préférée entre 4 000 et 16 000
- une température de transition vitreuse du bloc hydrophobe inférieure à 30°C, de préférence inférieure à 25°C et supérieure à -100°C, et
- une tension superficielle inférieure à 60 millinewton par mètre (mN/m), de préférence inférieure à 50mN/m, mesurée à une concentration dans l'eau déminéralisée inférieure ou égale à 10⁻⁴ mole/l, à 20°C et sous une atmosphère.

2. Copolymère tensioactif à blocs selon la revendication 1, **caractérisé en ce que** l'agent de transfert est choisi parmi les dithioesters, thioethers-thiones, dithiocarbamates, et les xanthates.

3. Procédé de préparation d'un copolymère tel que défini à la revendication 1, **caractérisé en ce que** ledit copolymère à blocs est préparé par un procédé comportant les étapes suivantes :
a) mise en contact de:
- au moins un monomère éthyléniquement insaturé,
- au moins une source de radicaux libres, et
- au moins un agent de transfert de formule (I): 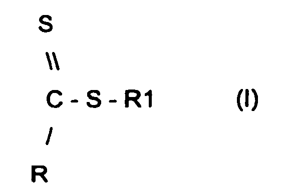
dans laquelle:
- R représente un groupe R2O-, R2R'2N- ou R3- avec :
R2 et R'2, identiques ou différents, représentant un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
R3 représentant H, CI, un groupe alkyle, aryle, alcène ou alcyne, un (hétéro)cycle saturé ou non, éventuellement substitués, un groupe alkylthio, alkoxycarbonyle, aryloxycarbonyle, carboxy, acyloxy, carbamoyles, cyano, dialkyl- ou diaryl-phosphonato, dialkyl- ou diaryl-phosphinato, une chaîne polymère,
- R1 représente un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, ou une chaîne polymère, et
b) répétition au moins une fois de la mise en contact précédente en utilisant:
- des monomères différents de la mise en oeuvre précédente, et
- à la place du composé précurseur de formule (I), le polymère issu de la mise en oeuvre précédente.

4. Procédé selon la revendication 3, **caractérisé en ce que** ledit procédé comporte en outre l'étape de :
c) rendre inerte l'agent de transfert à la fin de la polymérisation.

5. Procédé selon l'une des revendications 3 ou 4, **caractérisé en ce que** l'agent de transfert de formule (I) est un dithiocarbonate choisi parmi les composés de formules (IA), (IB) et (IC) suivantes: 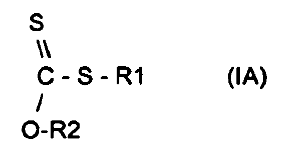 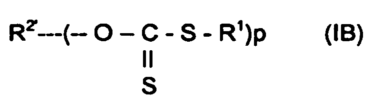 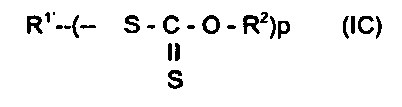 dans lesquelles:
- R2 et R2' représentent un groupe (i) alkyle, acyle, aryle, alcène ou alcyne, ou un cycle (ii) carboné, saturé ou non, éventuellement aromatique, ou un hétérocycle (iii), saturé ou non, ces groupes et cycles (i), (ii) et (iii) pouvant être substitués,
- R1 et R1' représentent un groupe (i) alkyle, acyle, aryle, alcène ou alcyne éventuellement substitué, ou un cycle (ii) carboné, saturé ou non, éventuellement substitué ou aromatique, ou un hétérocycle (iii), saturé ou non, éventuellement substitué, une chaîne polymère, et
- p est compris entre 2 et 10.

6. Procédé selon la revendication 4, **caractérisé en ce que** l'étape 3 comporte le masquage des fonctions chimiques actives dudit agent de transfert au moyen d'un agent masquant, ou la destruction de l'agent de transfert par une réaction d'hydrolyse, d'oxydation par catalyse métallique ou par l'utilisation de radicaux primaires.

7. Procédé selon l'une des revendications 3 à 6, **caractérisé en ce que** les monomères hydrophobes sont choisis parmi :
- les esters de l'acide acrylique et de l'acide méthacrylique avec les alcools en C₁-C₁₂ hydrogénés ou fluorés, de préférence C₁-C₈. Tels que l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle,
- les nitriles vinyliques ayant de 3 à 12 atomes de carbone, comme l'acrylonitrile et le méthacrylonitrile,
- les esters vinyliques d'acide carboxylique comme l'acétate de vinyle, le versatate de vinyle, le propionate de vinyle,
- les halogénures de vinyle,
- les amides de la vinylamine, notamment le vinylformamide ou le vinylacétamide, et
- les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrytates d'aminoalkyle et les (méth)acrylamides d'aminoalkyle comme le diméthylaminoéthyl-acrylate ou
- méthacrylate, le ditertiobutylaminoéthyl-acrylate ou -méthacrylate, le diméthylamino méthyl-acrylamide ou -méthacrylamide.

8. Procédé selon la revendication 7, **caractérisé en ce que** les monomères hydrophobes sont choisis parmi les esters de l'acide acryliques avec les alcools linéaires ou ramifiés en C₁-C₄ tels que l'acrylate de méthyle, d'éthyle, de propyle et de butyle.

9. Procédé selon l'une des revendications 3 à 8, **caractérisé en ce que** la polymérisation du copolymère est mise en oeuvre dans le tétrahydrofurane ou un alcool aliphatique en C₁-C₈ linéaire, cyclique ou ramifié.

10. Procédé selon la revendication 9, **caractérisé en ce que** l'alcool est le méthanol, l'éthanol, le cyclohexanol, ou l'ethylèneglycol et le monomère hydrophile est l'acide acrylique (AA), l'acrylamide (AM).

11. Utilisation dans un milieu aqueux des copolymères à blocs tels que définis à la revendication 1ou 2, en tant que promoteurs d'adhérence, agents mouillants ou agents d'hydrophilisation dans une quantité comprise entre 0,1 % et 10% en poids par rapport au milieu aqueux.

12. Utilisation des copolymères à blocs tels que définis à la revendication 1, pour améliorer l'adhésion des peintures sur des substrats hydrophobes, à la dose de 0,1 à 10%, de préférence de 0,5 à 5% en poids de copolymère par rapport au poids total de la peinture.

13. Utilisation des copolymères à blocs tels que définis à la revendication 1 ou 2, en tant qu'agent mouillant en solution aqueuse, suivant une quantité de 0,01 à 3 %, de préférence de 0,1 à 1% en poids de copolymère par rapport au poids total de ladite solution.

14. Utilisation des copolymères à blocs tels que définis à la revendication 1 ou 2, en tant que promoteurs d'agents détergents.

15. Utilisation des copolymères à blocs selon la revendication 14, en association avec un agent détergent, à une dose de préférence comprise entre 0,5 et 5% en poids par rapport au poids du détergent.

## Claims

1. Surface-active block copolymer comprising at least one hydrophilic block and at least one hydrophobic block which is prepared by a "living" preparation process using a transfer agent,
- the hydrophilic block being obtained by employing at least one monomer chosen from acrylic acid and acrylamide, and
- said copolymer exhibiting:
- a number-average molecular weight of between 1000 and 50 000, preferably between 2000 and 20 000, more preferably still between 4000 and 16 000,
- a glass transition temperature of the hydrophobic block of less than 30°C, preferably of less than 25°C, and greater than -100°C, and
- a surface tension of less than 60 millinewton per metre (mN/m), preferably of less than 50 mN/m, measured at a concentration in demineralized water of less than or equal to 10⁻⁴ mol/l, at 20°C and under one atmosphere.

2. Surface-active block copolymer according to Claim 1, **characterized in that** the transfer agent is chosen from dithioesters, thioethers-thiones, dithiocarbamates and xanthates.

3. Process for the preparation of a copolymer as defined in Claim 1, **characterized in that** the said block copolymer is prepared by a process comprising the following stages:
1) bringing into contact:
- at least one ethylenically unsaturated monomer,
- at least one source of free radicals, and
- at least one transfer agent of formula (I): 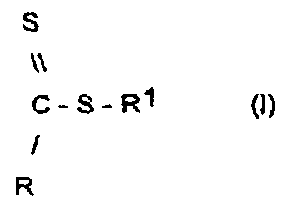
in which:
- R represents an R²O-, R²R^{2'}N- or R³- group with:
R² and R^{2'}, which are identical or different, representing (i) an alkyl, acyl, aryl, alkenyl or alkynyl group or (ii) a saturated or unsaturated, optionally aromatic, carbon ring or (iii) a saturated or unsaturated heterocycle, it being possible for these groups and rings (i), (ii) and (iii) to be substituted,
R³ representing H, Cl, an alkyl, aryl, alkenyl or alkynyl group, a saturated or unsaturated, optionally substituted, ring or heterocycle, an alkylthio, alkoxycarbonyl, aryloxycarbonyl, carboxyl, acyloxy, carbamoyl, cyano, dialkyl- or diarylphosphonato or dialkyl- or diarylphosphinato group, or a polymer chain,
- R¹ represents (i) an optionally substituted alkyl, acyl, aryl, alkenyl or alkynyl group or (ii) a saturated or unsaturated, optionally substituted or aromatic, carbon ring or (iii) a saturated or unsaturated, optionally substituted, heterocycle, or a polymer chain, and
2) repeating the above contacting operation at least once using:
- different monomers from the preceding implementation, and
- instead of the precursor compound of formula (I), the polymer resulting from the preceding implementation.

4. Process according to Claim 3, **characterized in that** the said process additionally comprises the stage of:
3) rendering the transfer agent inert at the end of the polymerization.

5. Process according to either of Claims 3 and 4, **characterized in that** the transfer agent of formula (I) is a dithiocarbonate chosen from the compounds of following formulae (IA), (IB) and (IC) : 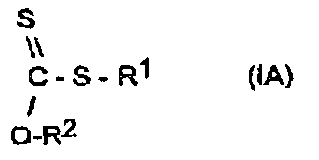 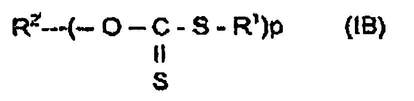 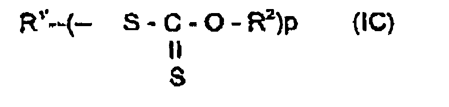 in which:
- R² and R^{2'} represent (i) an alkyl, acyl, aryl, alkenyl or alkynyl group or (ii) a saturated or unsaturated, optionally aromatic, carbon ring or (iii) a saturated or unsaturated heterocycle, it being possible for these groups and rings (i), (ii) and (iii) to be substituted,
- R¹ and R^{1'} represent (i) an optionally substituted alkyl, acyl, aryl, alkenyl or alkynyl group or (ii) a saturated or unsaturated, optionally substituted or aromatic, carbon ring or (iii) a saturated or unsaturated, optionally substituted, heterocycle, a polymer chain, and
- p is between 2 and 10.

6. Process according to Claim 4, **characterized in that** stage 3 comprises the blocking of the active chemical functional groups of the said transfer agent by means of a blocking agent or the destruction of the transfer agent by a hydrolysis reaction or oxidation reaction by metal catalysis or by the use of primary radicals.

7. Process according to one of Claims 3 to 6, **characterized in that** the hydrophobic monomers are chosen :from:
- esters of acrylic acid and methacrylic acid with hydrogen-comprising or fluorine-comprising C₁-C₁₂ alcohols, preferably C₁-C₆ alcohols, such as methyl acrylate, ethyl acrylate, propyl acrylate, n-butyl acrylate, isobutyl acrylate, 2-ethylhexyl acrylate, t-butyl acrylate, methyl methacrylate, ethyl methacrylate, n-butyl methacrylate or isobutyl methacrylate,
- vinyl nitriles having from 3 to 12 carbon atoms, such as acrylonitrile and methacrylonitrile,
- vinyl esters of carboxylic acids, such as vinyl acetate, vinyl versatate or vinyl propionate,
- vinyl halides,
- amides of vinylamine, in particular vinylformamide or vinylacetamide, and
- unsaturated ethylenic monomers comprising a secondary, tertiary or quaternary amino group or a nitrogen-comprising heterocyclic group, such as, for example, vinylpyridines, vinylimidazole, aminoalkyl (meth)acrylates and aminoalkyl(meth)acrylamides such as dimethylaminoethyl acrylate or methacrylate, di(tert-butyl)aminoethyl acrylate or methacrylate, or dimethyl-aminomethylacrylamide or -methacrylamide.

8. Process according to Claim 7, **characterized in that** the hydrophobic monomers are chosen from esters of acrylic acid with linear or branched C₁-C₄ alcohols, such as methyl acrylate, ethyl acrylate, propyl acrylate and butyl acrylate.

9. Process according to one of Claims 3 to 8, **characterized in that** the polymerization of the copolymer is carried out in tetrahydrofuran or a linear, cyclic or branched aliphatic C₁-C₈ alcohol.

10. Process according to Claim 9, **characterized in that** the alcohol is methanol, ethanol, cyclohexanol or ethylene glycol and the hydrophilic monomer is acrylic acid (AA) or acrylamide (AM).

11. Use in an aqueous medium of the block copolymers as defined in Claim 1 or 2 as adhesion promoters, wetting agents or hydrophilizing agents in an amount of between 0.1% and 10% by weight, with respect to the aqueous medium.

12. Use of the block copolymers as defined in Claim 1 for improving the adhesion of paints to hydrophobic substrates at a dose of 0.1 to 10% by weight, preferably of 0.5 to 5% by weight, of copolymer, with respect to the total weight of the paint.

13. Use of the block copolymers as defined in Claim 1 or 2 as wetting agents in aqueous solution according to an amount of 0.01 to 3% by weight, preferably 0.1 to 1% by weight, of copolymer, with respect to the total weight of the said solution.

14. Use of the block copolymers as defined in Claim 1 or 2 as promoters for detergent agents.

15. Use of the block copolymers according to Claim 14, in combination with a detergent agent, at a dose preferably of between 0.5 and 5% by weight, with respect to the weight of the detergent.

## Patentansprüche

1. Blockcopolymer-Tensid, welches wenigstens einen hydrophilen Block und wenigstens einen hydrophoben Block aufweist und hergestellt ist durch ein Herstellungsverfahren, das lebend genannt wird, mittels eines Transfermittels, wobei
- der hydrophile Block erhalten wird, indem wenigstens ein Monomer, gewählt aus Acrylsäure und Acrylamid, verwendet wird, und
- das Copolymer aufweist:
- eine molekulare Massenzahl zwischen 1.000 und 50.000, vorzugsweise zwischen 2.000 und 20.000, noch bevorzugter zwischen 4.000 und 16.000
- eine Glasübergangstemperatur des hydrophoben Blocks von weniger als 30°C, vorzugsweise weniger als 25°C, und mehr als -100°C, und
- eine Oberflächenspannung von weniger als 60 Millinewton pro Meter (mN/m), vorzugsweise weniger als 50 mN/m, gemessen bei einer Konzentration in demineralisiertem Wasser von weniger als oder gleich 10⁻⁴ mol/l, bei 20°C und unter Atmosphärendruck.

2. Blockcopolymer-Tensid gemäß Anspruch 1, **dadurch gekennzeichnet, dass** das Transfermittel aus den Dithioestem, Thioether-Thionen, Dithiocarbamaten und den Xanthaten gewählt ist.

3. Verfahren zur Herstellung eines Copolymers wie in Anspruch 1 definiert, **dadurch gekennzeichnet, dass** das Blockcopolymer mittels eines Verfahrens hergestellt ist, das die folgenden Schritte aufweist:
a) das in Kontakt Bringen von:
- wenigstens einem ethylenisch ungesättigten Monomer,
- wenigstens einer Quelle von freien Radikalen, und
- wenigstens einem Transfermittel der Formel (I) 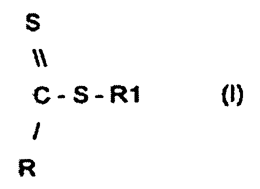
in welcher
- R eine Gruppe R2O-, R2R'2N- oder R3 darstellt, wobei:
R2 und R'2, identisch oder verschieden, eine Gruppe (i) Alkyl, Acyl, Aryl, Alken oder Alkin oder einen Kohlenstoffzyklus (ii), gesättigt oder nicht, gegebenenfalls aromatisch, oder einen Heterozyklus (iii), gesättigt oder nicht, darstellen, wobei diese Gruppen und Zyklen (i), (ii) und (iii) substituiert sein können,
- R3 Wasserstoff, Chlor, eine Alkyl-, Aryl-, Alken- oder Alkingruppe, einen (Hetero)Zyklus, gesättigt oder nicht, gegebenenfalls substituiert, eine Alkylthio-, Alkoxycarbonyl-, Aryloxycarbonyl-, Carboxy-, Acyloxygruppe, Carbamoyle, Cyano, Dialkyl- oder Diarylphosphonato, Dialkyl- oder Diarylphosphinato, eine Polymerkette darstellt,
- R1 eine Gruppe (i) Alkyl, Acyl, Aryl, Alken oder Alkin, gegebenenfalls substituiert, oder einen Kohlenstoffzyklus (ii), gesättigt oder nicht, gegebenenfalls substituiert oder aromatisch, oder einen Heterozyklus (iii), gesättigt oder nicht, gegebenenfalls substituiert, oder eine Polymerkette darstellt, und
b) wenigstens einmaliges Wiederholen des vorgenannten in Kontakt Bringens unter Verwendung von:
- unterschiedlichen Monomeren des vorigen Durchgangs, und
- statt der Vorläuferverbindung der Formel (I) das Polymer, das aus dem vorigen Durchgang hervorgegangen ist.

4. Verfahren gemäß Anspruch 3, **dadurch gekennzeichnet, dass** das Verfahren des Weiteren den folgenden Schritt aufweist:
c) Inertmachen des Transfermittels am Ende der Polymerisation.

5. Verfahren gemäß einem der Ansprüche 3 oder 4, **dadurch gekennzeichnet, dass** das Transfermittel der Formel (I) ein Dithiocarbonat ist, gewählt aus den Verbindungen der folgenden Formeln (IA), (IB) und (IC): 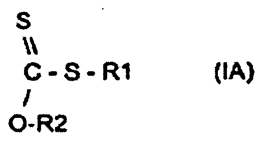 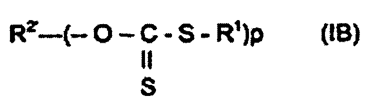 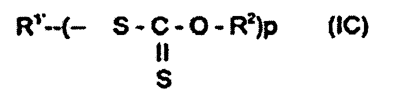 in denen:
- R2 und R2' eine Gruppe (i) Alkyl, Acyl, Aryl, Alken oder Alkin oder einen Kohlenstoffzyklus (ii), gesättigt oder nicht, gegebenenfalls aromatisch, oder einen Heterozyklus (iii), gesättigt oder nicht, darstellen, wobei diese Gruppen und Zyklen (i), (ii) und (iii) substituiert sein können,
- R1 und R1' eine Gruppe (i) Alkyl, Acyl, Aryl, Alken oder Alkin, gegebenenfalls substituiert, oder einen Kohlenstoffzyklus (ii), gesättigt oder nicht, gegebenenfalls substituiert oder aromatisch, oder einen Heterozyklus (iii), gegebenenfalls substituiert, eine Polymerkette darstellen, und
- p zwischen 2 und 10 liegt.

6. Verfahren gemäß Anspruch 4, **dadurch gekennzeichnet, dass** der Schritt 3 das Maskieren der aktiven chemischen Funktionen des Transfermittels mit Hilfe eines Maskierungsmittels oder die Zerstörung des Transfermittels durch eine Hydrolysereaktion, metallkatalytische Oxidation oder durch Verwendung von primären Radikalen aufweist.

7. Verfahren gemäß einem der Ansprüche 3 bis 6, **dadurch gekennzeichnet, dass** die hydrophoben Monomere gewählt sind aus:
- den Estern von Acrylsäure und von Methacrylsäure mit hydrogenierten oder fluorierten Alkoholen mit C₁-C₁₂, vorzugsweise C₁-C₈; wie Methylacrylat, Ethylacrylat, Propylacrylat, n-Butylacrylat, Isobutylacrylat, 2-Ethylhexylacrylat, t-Butylacrylat, Methylmethacrylat, Ethyhnethacrylat, n-Butylmethacrylat, Isobutylmethacrylat,
- den Vinylnitrilen mit 3 bis 12 Kohlenstoffatomen, wie Acrylnitril und Methacrylnitril,
- den Vinylestern von Carbonsäure, wie Vinylacetat, Vinylversatat, Vinylpropionat,
- den Vinylhalogeniden,
- den Amiden von Vinylamin, insbesondere Vinylformamid oder Vinylacetamid, und
- den ethylenisch ungesättigten Monomeren, welche eine sekundäre, tertiäre oder quarternäre Aminogruppe, oder eine heterozyklische Gruppe, die Stickstoff enthält, aufweist, wie zum Beispiel die Vinylpyridine, Vinylimidazol, die Aminoalkyl(meth)acrylate und die Aminoalkyl(meth)acrylamide, wie Dimethylaminoethylacrylat oder -methacrylat, Ditertiobutylaminoethylacrylat oder
- methacrylat, Dimethylaminomethylacrylamid oder -methacrylamid.

8. Verfahren gemäß Anspruch 7, **dadurch gekennzeichnet, dass** die hydrophoben Monomere gewählt sind aus den Estern der Acrylsäure mit linearen oder verzweigten Alkoholen mit C₁-C₄, wie Methylacrylat, Ethylacrylat, Propylacrylat und Butylacrylat.

9. Verfahren gemäß einem der Ansprüche 3 bis 8, **dadurch gekennzeichnet, dass** die Polymerisation des Copolymers in Tetrahydrofuran oder einem aliphatischen Alkohol mit C₁-C₈, linear, zyklisch oder verzweigt, durchgeführt wird.

10. Verfahren gemäß Anspruch 9, **dadurch gekennzeichnet, dass** der Alkohol Methanol, Ethanol, Cyclohexanol oder Ethylenglykol ist und das hydrophile Monomer Acrylsäure (AA), Acrylamid (AM) ist.

11. Verwendung in einem wässrigen Medium von Blockcopolymeren wie in Anspruch 1 oder 2 definiert als Haftvermittler, Netzmittel oder Hydrophilisierungsmittel, in einer Menge zwischen 0,1 und 10 Gew.-% bezogen auf das wässrige Medium.

12. Verwendung von Blockcopolymeren wie in Anspruch 1 definiert für die Verbesserung der Haftung von Farben auf hydrophoben Trägem, in einer Menge von 0,1 bis 10 Gew.-%, vorzugsweise 0,5 bis 5 Gew.-% an Copolymer bezogen auf das Gesamtgewicht der Farbe.

13. Verwendung von Blockcopolymeren wie in Anspruch 1 oder 2 definiert als Netzmittel in wässriger Lösung, mit einer Menge von 0,01 bis 3 Gew.-%, vorzugsweise 0,1 bis 1 Gew.-% an Copolymer bezogen auf das Gesamtgewicht der Lösung.

14. Verwendung von Blockcopolymeren wie in Anspruch 1 oder 2 definiert als Promotor für Reinigungsmittel.

15. Verwendung von Blockcopolymeren gemäß Anspruch 14 in Verbindung mit einem Reinigungsmittel, mit einer Menge von vorzugsweise 0,5 bis 5 Gew.-%, bezogen auf das Gesamtgewicht des Reinigungsmittels.
